# FASCICULE DE BREVET EUROPEEN

(11) **EP 1 009 270 B1**
(45) Date de publication et mention de la délivrance du brevet: **19.03.2003**
(21) Numéro de dépôt: 98943936.9
(22) Date de dépôt: 04.09.1998
(51) Int. Cl.: A47J 31/40, A47J 31/54

(54) **GROUPE D'INFUSION POUR DISTRIBUTEURS AUTOMATIQUES DE BOISSONS COMPRENANT NOTAMMENT UNE CHAUDIERE**
INFUSIONSGRUPPE FÜR GETRÄNKESPENDER VON AROMATISCHEN GETRÄNKEN MIT EINEM BOILER
BREWING UNIT FOR AUTOMATIC BEVERAGE DISPENSERS COMPRISING IN PARTICULAR A BOILER

(30) Priorité: 05.09.1997 IT CO970015 U; 20.03.1998 IT CO980005 U
(43) Date de publication de la demande: 21.06.2000
(73) Titulaire: Moulinex S.A., 14015 Caen Cedex (FR)
(72) Inventeur: GIANNELLI, Giuseppe, I-22077 Olgiate (IT)
(74) Mandataire: Busquets, Jean-Pierre
(86) Numéro de dépôt international: FR9801905
(87) Numéro de publication internationale: WO99012456

(56) Documents cités:
- EP-A- 0 270 141
- DE-A- 4 203 088
- FR-A- 2 444 437
- FR-A- 2 447 173
- US-A- 3 413 909
- US-A- 5 479 849

## Description

La présente invention se rapporte d'une manière générale aux groupes d'infusion pour distributeurs automatiques de boissons à partir de poudre de café ou autre, et concerne, plus particulièrement, un groupe d'infusion comportant un corps à axe longitudinal V renfermant une chambre d'infusion présentant un fond et un débouché, comportant un plateau-filtre et susceptible de recevoir un piston presseur monté déplaçable selon l'axe (V) au moyen d'un mécanisme d'entraînement, des moyens de pompage destinés à créer une circulation d'eau et d'infusion, ainsi qu'une chaudière destinée à chauffer l'eau pour la préparation de l'infusion dans la chambre.

Dans un groupe d'infusion de ce genre, la chaudière est généralement indépendante du corps renfermant la chambre d'infusion et provoque de ce fait une perte calorifique importante dans la circulation d'eau et d'infusion. En outre, du fait du détachement de cette chaudière, le corps renfermant la chambre d'infusion se réchauffe uniquement lors du passage de l'eau chaude dans ladite chambre donnant ainsi pendant les premiers cycles de réalisation de l'infusion une température trop faible à cette infusion qui ne satisfait aucunement l'utilisateur.

On connaît également par le document EP - A - 270 141 une chaudière qui est rattachée au corps formant la chambre d'infusion uniquement par un pont thermique situé en partie haute du corps. Cette structure ne permet donc pas d'obtenir une homogénéisation de la température dans le corps, formant ainsi des zones tièdes dans la chambre d'infusion.

D'autre part, dans ce type de groupe d'infusion, les moyens de pompage créent une circulation d'eau chaude de la chaudière, via le piston presseur, à la chambre d'infusion par laquelle s'écoule l'infusion réalisée, comme on le comprendra, ce sens de circulation d'eau amplifie la perte calorifique et est donc néfaste à la bonne confection d'une infusion.

L'invention a notamment pour but de remédier à ces inconvénients et d'offrir un groupe de conception simple et économique.

Selon l'invention, le groupe d'infusion est plus particulièrement caractérisé en ce que la chaudière et le corps sont formés en une seule pièce de matériau conducteur de la chaleur qui contient une résistance électrique chauffante, des canaux de passage et chauffage de l'eau dont des entrées sont reliées à un réservoir d'eau froide et dont des extrémités débouchent sur le fond de la chambre d'infusion, et le piston presseur présente un conduit de passage de l'infusion débouchant par un orifice de sortie, tandis que les moyens de pompage sont adaptés à créer une circulation d'infusion ascendante dans la chambre d'infusion vers le conduit de passage lorsque le piston presseur ferme le chambre.

Ainsi, grâce à cette conception, on réalise un ensemble compact : chaudière - corps - chambre d'infusion, procurant une grande homogénéité de température et donc un chauffage rapide et important de l'eau à travers les canaux qui se communique à l'infusion en cours de réalisation dans la chambre d'infusion. En outre, cette circulation ascendante de la chambre vers le piston minimise les pertes de chaleur et conduit à l'obtention d'une infusion excellente, à savoir, bonne extraction des essences de la poudre de café aux environs de 92°C à 96°C et température adéquate de ce café aux environs de 72°C, 75°C.

Selon une version avantageuse de l'invention, les canaux s'étendent en majeure partie selon des axes parallèles à l'axe longitudinal V sous la chambre d'infusion.

Ainsi, le problème d'entartrage généralement lié aux chaudières existantes est pratiquement éliminé dans le groupe de l'invention du fait que ces canaux ne présentent pas de coude dans leur partie chaude. D'autre part, on comprendra que de tels canaux peuvent être également facilement nettoyés par un outil de grattage pour les maintenir dans leur état de propreté initiale.

Suivant d'autres caractéristiques de l'invention, le corps présente dans sa paroi latérale une rainure d'insertion de la résistance et comporte en regard de la résistance une chaudière secondaire qui présente à cet effet un boîtier profilé adapté à venir épouser la paroi latérale par un profil périphérique en ménageant une chambre aplatie ayant une entrée d'eau froide et une sortie de vapeur.

Cette chaudière secondaire accolée au corps est particulièrement économique puisqu'elle utilise le corps et la résistance électrique comme éléments communs. Cette chaudière secondaire est notamment utilisée pour la réalisation de la fonction vapeur utile à la confection de thé ou de cappuccinos.

Les caractéristiques et avantages de l'invention ressortiront de la description qui va suivre, prise à titre d'exemple non limitatif, en référence aux dessins annexés dans lesquels :
- la figure 1 est une coupe frontale verticale partielle d'un groupe d'infusion selon l'invention ;
- la figure 2 est une vue de gauche du groupe de la figure 1 avec éclatement d'une chaudière secondaire et enlèvement d'un mécanisme d'éjection ;
- la figure 3 est une coupe verticale à plus grande échelle d'un piston presseur du groupe d'infusion selon l'invention.

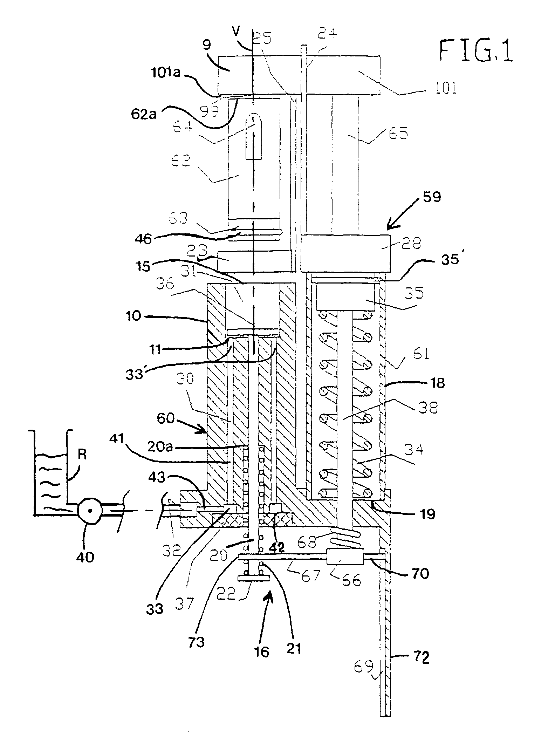

Dans l'exemple de réalisation illustré à la figure 1, le groupe d'infusion est destiné à équiper une machine à café du type automatique comprenant une alimentation en eau froide, un distributeur de café en poudre provenant soit d'un magasin à poudre de café, soit d'un broyeur à café intégré au distributeur et un dispositif électronique de commande et de gestion des cycles de préparation des infusions.

Un tel groupe d'infusion comprend notamment un corps 10 à axe longitudinal V renfermant une chambre d'infusion 31 qui présente un fond 11 et un débouché 15 ainsi qu'un plateau-filtre 36 et qui est susceptible de recevoir un piston presseur 62 monté déplaçable selon l'axe V au moyen d'un mécanisme d'entraînement 59, des moyens de pompage schématisés en 40, destinés à créer une circulation d'eau et d'infusion, ainsi qu'une chaudière 60 destinée à chauffer l'eau pour la préparation de l'infusion dans la chambre 31. Selon une caractéristique particulière de l'invention, mais non limitative, le corps 10 est agencé latéralement à un vérin hydraulique hybride à simple effet 61 dont la tête de piston 35 comporte une tige supérieure 65 portant un bras 101 formant potence et dont l'extrémité libre 9 est reliée au piston presseur 62, les courses des pistons 61 et 62 étant ainsi effectuées selon des directions pratiquement parallèles. En outre, le piston presseur 62 est monté flottant sur un pivot 99 relié au bras 101 en ménageant ainsi un léger jeu axial entre la partie supérieure 62a du piston presseur et la partie inférieure 101a du bras.

Selon l'invention, la chaudière 60 et le corps 10 sont formés en une seule pièce de matériau conducteur de la chaleur qui contient une résistance électrique chauffante 26, des canaux 30 de passage et chauffage de l'eau dont des entrées 33 sont reliées, via les moyens de pompage, à un réservoir d'eau froide (R) et dont des extrémités 33' débouchent sur le fond 11 de la chambre d'infusion 31, et le piston presseur 62 présente un conduit 42 de passage de l'infusion débouchant par un orifice de sortie 42b, tandis que les moyens de pompage 40 sont adaptés à créer une circulation d'eau ascendante dans la chambre d'infusion 31 vers le conduit 42 lorsque le piston presseur 62 ferme le chambre 31. De préférence, le matériau conducteur est l'aluminium, mais des matériaux comme le cuivre, le zinc ou ses alliages peuvent être utilisés.

Il convient de souligner que cette conception en une seule pièce de matériau conducteur de la chaleur du corps 10 renfermant la chambre 31 et de la chaudière 60 permet d'obtenir un ensemble compact de température homogène qui s'associe en outre à la construction latérale de la pièce formant le corps et la chaudière avec le vérin hydraulique 61 pour constituer un groupe d'infusion de très faible encombrement et donc permet d'obtenir un prix de revient inférieur à celui d'un groupe connu, et d'entraîner pareillement une diminution du prix de la machine. En effet, comme représenté, la pièce unique corps-chaudière forme également le fond du vérin ce qui est très économique et robuste.

Par ailleurs, dans le but d'accroître cette économie de prix de revient, le plateau-filtre est monté mobile dans la chambre d'infusion 31 au moyen d'un mécanisme d'éjection 16, ledit mécanisme 16 comprenant une tige 20 montée coulissante dans un alésage 20a pratiqué dans le corps 10 selon l'axe (V) et traversant un couvercle 37.

Selon une version avantageuse de l'invention, les canaux s'étendent en majeure partie selon des axes parallèles à l'axe longitudinal (V) sous la chambre d'infusion.

Ainsi, comme on le voit bien sur la figure 1, les canaux 30 sont formés chacun d'un grand tronçon rectiligne 41 débouchant par l'extrémité 33' dans la chambre 31 et par l'entrée 33 dans un puits 42, et d'un petit tronçon rectiligne 43 débouchant dans ledit puits 42 et dans l'entrée 32, ledit puits étant fermé par le couvercle 37 monté amovible. Grâce à une telle réalisation, le corps 10 et la chaudière 61 formant un bloc unique peuvent être réalisés en un matériau extrudable résistant à la chaleur et aux contraintes mécaniques tel qu'un aluminium filé.

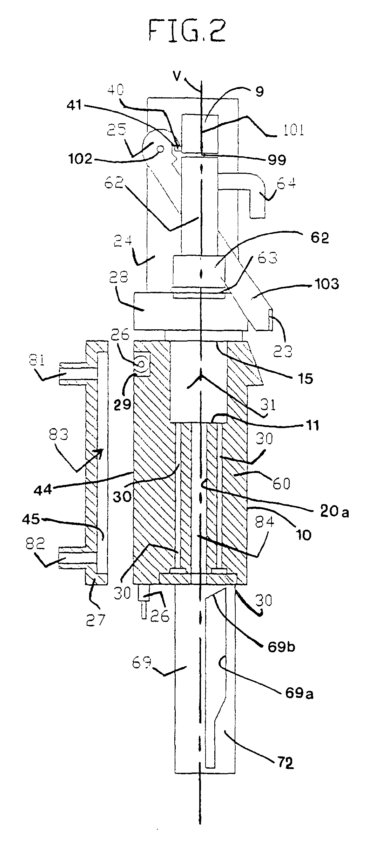

En se rapportant à la figure 2, on voit que le corps 10 présente dans sa paroi latérale 44 une rainure 29 d'insertion de la résistance 26. La résistance électrique chauffante 26 s'étend ainsi latéralement sur toute la hauteur du corps 10. En outre, la rainure 29 présente la forme d'un U et la résistance 26 étant du type blindé présente une forme d'épingle en U similaire à la forme de la rainure.

Ainsi, le corps 10, les canaux 30 et la chambre d'infusion 31 sont chauffés sur toute leur hauteur homogénéisant la température de façon pratiquement instantanée. D'autre part, les tronçons rectilignes 41 des canaux ne favorisent pas le dépôt de tartre et peuvent être facilement nettoyés par un outil qui sera introduit dans les canaux 30 après enlèvement du couvercle 37.

Selon une autre caractéristique de l'invention particulièrement avantageuse dans la prévention contre la toxicité des matériaux, et dans le cas où le matériau du corps est l'aluminium, les parois internes de la chambre 31 et les canaux 30 sont chemisés d'un matériau inerte par rapport à l'eau tel que, par exemple, de l'acier inoxydable.

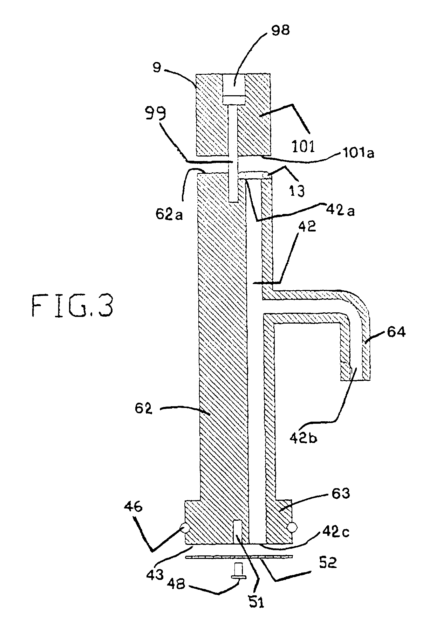

Comme représenté à la figure 3, le piston presseur 62 comporte un conduit interne 42 de passage de l'infusion qui présente au moins deux orifices, un premier orifice d'entrée de l'infusion 42c débouchant dans la face inférieure 43 du piston, et un second orifice de sortie 42b formant petite fontaine 64 de sortie d'infusion.

Selon encore une autre caractéristique, le piston presseur présente un troisième orifice 42a formant prise d'air et agencé dans la partie supérieure 62a du piston, ledit piston presseur 62 étant monté en outre mobile axialement sur le pivot 99 et ledit troisième orifice 42a comportant un joint 13 susceptible de fermer cet orifice lorsque le piston vient en contact avec la partie inférieure 101a du bras 101. Le pivot 99 est monté mobile dans un trou 98 pratiqué dans le bras 101.

L'intérêt de ce montage du piston presseur mobile axialement en combinaison avec le troisième orifice 42a réside dans la création d'une prise d'air extérieur qui lors du mouvement de remontée dudit piston presseur de sa position de compression à sa position d'extraction crée une dépression dans la chambre 31 et donc une entrée d'air frais suffisamment importante dans le conduit 42 pour sécher la galette de marc reposant sur le plateau filtre 36.

Afin de fournir au groupe d'infusion selon l'invention une fonction vapeur, la présente invention prévoit que le corps 10 comporte en regard de la résistance 26 une chaudière secondaire 83 qui présente à cet effet un boîtier profilé adapté à venir épouser la paroi latérale 44 par un profil périphérique 27 en ménageant une chambre aplatie 45 ayant une entrée d'eau froide 81 et une sortie de vapeur 82.

Grâce à l'usage commun de la résistance 26 et du corps 10, cette chaudière secondaire est particulièrement économique et offre en outre l'avantage d'une vaporisation instantanée de l'eau dans cette chambre aplatie.

En se rapportant à la figure 1, l'invention, selon encore une autre caractéristique, prévoit que le plateau-filtre 36 est monté mobile dans la chambre d'infusion 31 au moyen d'un mécanisme d'éjection 16, ledit mécanisme 16 comprend une tige 20 montée coulissante dans un alésage 20a pratiqué dans le corps 10 selon l'axe longitudinal (V) et traversant le couvercle 37. Cette réalisation est particulièrement simple et fiable en raison notamment de la construction du corps 10 qui permet de faire simplement coulisser la tige 20 dans un alésage 20a pratiqué sous la chambre 31 et selon l'axe longitudinal V.

Ainsi, en fonctionnement, lorsque les moyens de pompage 40 alimentent en eau froide par l'entrée 32 les canaux 30, ces derniers ont été chauffés sur toute leur longueur pratiquement instantanément par la résistance électrique 26 et donc conduisent une eau chaude à température constante dans la chambre 31. Cette circulation d'eau chaude et par suite de l'infusion dans le conduit 42 du piston presseur 62 qui ferme en compression la chambre 31 favorise le maintien en température de l'infusion jusqu'à l'orifice de sortie 42b de la fontaine 64. Cette infusion est amenée par un conduit en matière plastique thermiquement isolante jusqu'au point d'injection dans la ou les tasses posées dans la machine distributeur automatique.

L'invention s'applique notamment aux machines de préparation de café du type espresso.

## Revendications

1. Groupe d'infusion pour distributeur automatique de boissons à partir de poudre de café ou autres et comportant un corps (10) à axe longitudinal V renfermant une chambre d'infusion (31) présentant un fond (11) et un débouché (15), comportant un plateau-filtre (36) et susceptible de recevoir un piston presseur (62) monté déplaçable selon l'axe (V) au moyen d'un mécanisme d'entraînement (59), des moyens de pompage (40) destinés à créer une circulation d'eau et d'infusion, ainsi qu'une chaudière (60) destinée à chauffer l'eau pour la préparation de l'infusion dans la chambre (31),
**caractérisé en ce que** la chaudière (60) et le corps (10) sont formés en une seule pièce de matériau conducteur de la chaleur qui contient une résistance électrique chauffante (26), des canaux (30) de passage et chauffage de l'eau dont des entrées (33) sont reliées à un réservoir d'eau froide (R) et dont des extrémités (33') débouchent sur le fond (11) de la chambre d'infusion (31), et le piston presseur (62) présente un conduit (42) de passage de l'infusion débouchant par un orifice de sortie (42b), tandis que les moyens de pompage (40) sont adaptés à créer une circulation d'eau ascendante dans la chambre d'infusion (31) vers le conduit (42) lorsque le piston presseur (62) ferme le chambre (31).

2. Groupe d'infusion selon la revendication 1,
**caractérisé en ce que** les canaux (30) s'étendent en majeure partie selon des axes parallèles à l'axe longitudinal (V) sous la chambre d'infusion 31.

3. Groupe d'infusion selon la revendication 2,
**caractérisé en ce que** les canaux (30) sont formés chacun d'un grand tronçon rectiligne (41) débouchant dans la chambre (31) et dans un puits (42), et d'un petit tronçon rectiligne (43) débouchant dans ledit puits (42) et dans l'entrée (32), ledit puits étant fermé par un couvercle (37) amovible.

4. Groupe d'infusion selon l'une quelconque des revendications précédentes,
**caractérisé en ce que** la résistance électrique chauffante (26) s'étend latéralement sur toute la hauteur du corps (10).

5. Groupe d'infusion selon la revendication 4,
**caractérisé en ce que** le corps (10) présente dans sa paroi latérale (44) une rainure (29) d'insertion de la résistance (26).

6. Groupe d'infusion selon la revenàication 4 ou 5,
**caractérisé en ce que** la rainure (29) présente la forme d'un U et la résistance (26) étant du type blindé présente une forme d'épingle en U similaire à la forme de la rainure.

7. Groupe d'infusion selon l'une quelconque des revendications précédentes
**caractérisé en ce que** le mécanisme d'entraînement (59) comprend un vérin hydraulique (61) agencé latéralement à la pièce formant la chaudière (60) et le corps (10) et dont la tête de piston (35) comporte une tige supérieure (65) portant un bras (101) formant potence et dont l'extrémité libre (9) est reliée par un pivot (99) au piston presseur (62).

8. Groupe d'infusion selon l'une quelconque des revendications précédentes,
**caractérisé en ce que** le piston presseur (62) comporte un conduit interne (42) de passage de l'infusion qui présente au moins deux orifices, un premier orifice d'entrée de l'infusion (42c) débouchant dans la face inférieure (43) du piston. presseur, et un second orifice de sortie (42b) formant petite fontaine (64) de sortie d'infusion.

9. Groupe d'infusion selon les revendications 7 et 8,
**caractérisé en ce que** le piston presseur présente un troisième orifice (42a) formant prise d'air et agencé dans la partie supérieure (62a) du piston presseur, ledit piston presseur (62) étant monté mobile axialement sur le pivot (99) et ledit troisième orifice (42a) comportant un joins (13) susceptible de fermer cet orifice lorsque le piston presseur vient en contact avec la partie inférieure (101a) du bras (101).

10. Groupe d'infusion selon les revendications 4 à 6,
**caractérisé en ce que** le corps (10) comporte en regard de la résistance (26) une chaudière secondaire (83) qui présente à cet effet un boîtier profilé adapté à venir épouser la paroi latérale (44) par un profil périphérique (27) en ménageant une chambre aplatie (45) ayant une entrée d'eau froide (81) et une sortie de vapeur (82).

11. Groupe d'infusion selon l'une quelconque des revendications précédentes,
**caractérisé en ce que** la pièce de matériau conducteur de la chaleur formant le corps (10) et la chaudière (60) étant en aluminium, les parois internes de la chambre 31 et les canaux 30 sont chemisés d'un matériau inerte par rapport à l'eau.

12. Groupe d'infusion selon les revendications 2 et 3,
**caractérisé en ce que** le plateau-filtre (36) étant monté mobile dans la chambre d'infusion (31) au moyen d'un mécanisme d'éjection (16), ledit mécanisme (16) comprenà une tige (20) montée coulissante dans un alésage (20a) pratiqué dans le corps (10) selon l'axe (V) et traversant le couvercle (37).

13. Groupe d'infusion selon l'une quelconque des revendications précédentes
**caractérisé en ce que** le corps (10) et la chaudière (61) formant un bloc unique sont réalisés en un matériau extrudable résistant à la chaleur et aux contraintes mécaniques.

## Claims

1. Infusion unit for an automatic beverage dispenser using coffee powder or the like and comprising a body (10) with a longitudinal axis V enclosing an infusion chamber (31) having a bottom (11) and an outlet (15), comprising a filter plate (36) and able to receive a pressing piston (62) mounted so as to be able to move along the axis (V) by means of a drive mechanism (59), pumping means (40) intended to create a circulation of water and infusion, as well as a boiler (60) intended to heat the water for preparing the infusion in the chamber (31), **characterised in that** the boiler (60) and the body (10) are formed in a single piece of heat-conducting material which contains an electric heating element (26), channels (30) for the passage and heating of the water whose inlets (33) are connected to a cold water reservoir (R) and whose ends (33') open out on the bottom (11) of the infusion chamber (31), and the pressing piston (62) has an infusion passage conduit (42) opening out through an outlet orifice (42b), whilst the pumping means (40) are adapted to create an upward circulation of water in the infusion chamber (31) towards the conduit (42) when the pressing piston (62) closes off the chamber (31).

2. Infusion unit according to claim 1, **characterised in that** the channels (30) extend for the major part along axes parallel to the longitudinal axis (V) under the infusion chamber (31).

3. Infusion unit according to claim 2, **characterised in that** the channels (30) are each formed from a large rectilinear portion (41) opening out in the chamber (31) and in a well (42), and a small rectilinear portion (43) opening out in the said well (42) and in the inlet (32), the said well being closed by a removable cover (37).

4. Infusion unit according to any one of the preceding claims, **characterised in that** the electric heating element (26) extends laterally over the entire height of the body (10).

5. Infusion unit according to claim 4, **characterised in that** the body (10) has in its side wall (44) a groove (29) for inserting the element (26).

6. Infusion unit according to claim 4 or 5, **characterised in that** the groove (29) has a U shape and the element (26) being of the shielded type has the form of a U-shaped hairpin similar to the shape of the groove.

7. Infusion unit according to any one of the preceding claims, **characterised in that** the drive mechanism (59) comprises a hydraulic ram (61) arranged laterally to the part forming the boiler (60) and the body (10) and whose piston head (35) comprises a top rod (65) carrying an arm (101) forming a bracket and whose free end (9) is connected to the pressing piston (62) by a pivot (99).

8. Infusion unit according to any one of the preceding claims, **characterised in that** the pressing piston (62) comprises an internal infusion passage conduit (42) which has at least two orifices, a first infusion inlet orifice (42c) opening out in the bottom face (43) of the pressing piston and a second outlet orifice (42b) forming a small infusion outlet fountain (64).

9. Infusion unit according to claims 7 and 8, **characterised in that** the pressing piston has a third orifice (42a) forming a breather and arranged in the top part (62a) of the pressing piston, the said pressing piston (62) being mounted so as to be able to move axially on the pivot (99) and the said third orifice (42a) comprising a joint (13) able to close off this orifice when the pressing piston comes into contact with the bottom part (101a) of the arm (101).

10. Infusion unit according to claims 4 to 6, **characterised in that** the body (10) comprises, opposite the element (26), a secondary boiler (83) which has for this puzpose a profiled casing adapted to hug the side wall (44) by means of a peripheral profile (27) whilst forming a flattened chamber (45) having a cold water inlet (81) and a steam outlet (82).

11. Infusion unit according to any one of the preceding claims, **characterised in that** the piece of heat-conducting material forming the body (10) and the boiler (60) being made from aluminium, the internal walls of the chamber (31) and the channels (30) are lined with a material which is inert with respect to water.

12. Infusion unit according to claims 2 and 3, **characterised in that,** the filter plate (36) being mounted so as to be able to move in the infusion chamber (31) by means of an ejection mechanism (16), the said mechanism (16) comprises a rod (20) mounted so as to slide in a bore (20a) formed in the body (10) along the axis (V) and passing through the cover (37).

13. Infusion unit according to any one of the preceding claims, **characterised in that** the body (10) and the boiler (60) forming a single unit are produced from an extrudable material resistant to heat and mechanical stresses.

## Patentansprüche

1. Brüheinheit Für einen automatischen Getränkespender für aus Kaffeemehl oder anderem zubereitete Brühgetränke mit einem Körper (10) mit Längsachse V, der eine Brühkammer (31) umschließt, welche einen Boden (11) und eine Mündung (15) aufweist, eine Siebplatte (36) umfaßt und einen Preßkolben (62) aufnehmen kann, der mittels eines Antriebsmechanismus (59) gemäß der Achse (V) verschiebbar montiert ist, mit einer Pumpvorrichtung (40), die zur Erzeugung eines Stroms von Wasser und Brühgetränk bestimmt ist, sowie mit einem Wasserkessel (60) zum Erhitzen des Wassers zur Zubereitung des Brühgetränks (31), **dadurch gekennzeichnet, daß** der Wasserkessel (60) und der Körper (10) aus einem wärmeleitenden Material in einem Teil geformt sind, das einen elektrischen Heizwiderstand (26), Kanäle (30) für den Durchtritt und das Erhitzen des Wassers, deren Einlaßöffnungen (33) mit einem Kaltwasserbehälter (R) verbunden sind und deren Enden (33') am Boden (11) der Brühkammer (31) münden, enthält, und der Preßkolben (62) eine durch eine Austrittsöffnung (42b) mündende Leitung (42) für den Durchtritt des Brühgetränks aufweist, während die Pumpvorrichtung (40) so eingerichtet ist, daß sie einen in der Brühkammer (31) zur Leitung (42) aufsteigenden Wasserstrom erzeugt, wenn der Preßkolben (62) die Kammer (31) verschließt.

2. Brüheinheit nach Anspruch 1, **dadurch gekennzeichnet, daß** die Kanäle (30) sich in ihrem Hauptabschnitt gemäß zur Längsachse (V) parallelen Achsen unter der Brühkammer (31) erstrekken.

3. Brüheinheit nach Anspruch 2, **dadurch gekennzeichnet, daß** die Kanäle (30) jeder gebildet sind von einem großen geraden Abschnitt (41), der in der Kammer (31) und in einem Schacht (42) mündet, und aus einem kleinen geraden Abschnitt (43), der in dem Schacht (42) und in Einlaß (32) mündet, wobei der Schacht durch einen abnehmbaeen Deckel (37) verschlossen ist.

4. Brüheinheit nach einem der vorangehenden Ansprüche, **dadurch gekennzeichnet, daß** der elektrische Heizwiderstand (26) sich seitlich über die ganze Höhe des Körpers (10) erstreckt.

5. Brüheinheit nach Anspruch 4, **dadurch gekennzeichnet, daß** der Körper (10) in seiner Seitenwand (44) eine Nut (29) zum Einschieben des Widerstandes (26) aufweist.

6. Brüheinheit nach Anspruch 4 oder 5, **dadurch gekennzeichnet, daß** die Nut (29) eine U- Form aufweist und der Widerstand (26) vom Typ ummantelter Widerstand eine Haamadel- U- Form ähnlich der Form der Nut aufweist.

7. Brüheinheit nach einem der vorangehenden Ansprüche, **dadurch gekennzeichnet, daß** der Antriebsmechanismus (59) einen Arbeitszylinder (61) aufweist, der seitlich an dem den Wasserkessel (60) und den Körper (10) bildenden Teil angeordnet ist und dessen Kolbenkopf (35) eine obere Stange (65) mit einem Arm (101), aufweist, der einen Träger bildet und dessen freies Ende (9) durch einen Zapfen (99) mit dem Preßkolben (62) verbunden ist.

8. Brüheinheit nach einem der vorangehenden Ansprüche, **dadurch gekennzeichnet, daß** der Preßkolben (62) eine Innenleitung (42) für den Durchtritt des Brühgetränks mit mindestens zwei Öffnungen, einer ersten Öffnung für den Einlaß des Brühgetränks (42c), die in der Unterseite (43) des Preßkolbens mündet, und eine zweite Öffnung für den Austritt (42b), die einen kleinen Brunnen (64) für den Austritt des Brühgetränks bildet, aufweist.

9. Brüheinheit nach den Ansprüchen 7 und 8, **dadurch gekennzeichnet, daß** der Preßkolben eine dritte Öffnung (42a) aufweist, die als Belüftungsölung dient und im oberen Teil (62a) des Preßkolbens ausgebildet ist, wobei der Preßkolben (62) am Zapfen (99) axial beweglich montiert ist und die dritte Öffnung (42a) eine Dichtung (13) aufweist, welche diese Öffnung verschließen kann, wenn der Preßkolben in Berührung mit dem unteren Teil (101a) des Arms 101 gelangt.

10. Brüheinheit nach den Ansprüchen 4-6, **dadurch gekennzeichnet, daß** der Körper (10) gegenüber dem Widerstand (26) einen zweiten Wasserkessel (83) aufweist, der zu diesem Zweck ein Gehäuseprofil aufweist, das sich durch ein Umfangsprofil (27) der Seitenwand (44) anpaßt, indem eine flache Kammer (45) mit einem Kaltwassereinlaß (81) und einem Dampfauslaß (82) ausgebildet wird.

11. Brüheinheit nach einem der vorangehenden Ansprüche, **dadurch gekennzeichnet, daß** das aus einem wärmeleitenden Material bestehende, den Körper (10) und den Wasserkessel (60) bildende Teil aus Aluminium ist, wobei die Innenwände der Kammer (31) und die Kanäle (30) mit einem gegenüber Wasser inerten Material ausgekleidet sind.

12. Brüheineit nach den Ansprüchen 2 und 3, **dadurch gekennzeichnet, daß** die Siebplatte (36) in der Brühkammer (31) mittels eines Auswurfsmechanismus (16) beweglich montiert ist, wobei der Mechanismus (16) eine S tange (20) aufweist, die in einer im Körper (10) gemäß der Achse (V) ausgebildeten Bohrung (20a) verschiebbar montiert ist und den Deckel (37) durchsetzt.

13. Brüheinheit nach einem der vorangehenden Ansprüche, **dadurch gekennzeichnet, daß** der Körper (10) und der Wasserkessel (61) einen einzigen Block bilden und aus einem extrudierbaren Material, das gegen Wärme und mechanische Beanspruchung beständig ist, hergestellt sind.
